(19) Europäisches Patentamt
European Patent Office
Office européen des brevets

(11) Veröffentlichungsnummer: **0 332 802 A1**

# (12) EUROPÄISCHE PATENTANMELDUNG

(21) Anmeldenummer: **89100439.2**

(22) Anmeldetag: **11.01.89**

(51) Int. Cl.[4]: **C08K 5/07 , C08K 5/15 , C08K 5/34**

Ein Antrag gemäss Regel 88 EPÜ auf Berichtigung der Beschreibung und der Ansprüche liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **18.03.88 DE 3809236**

(43) Veröffentlichungstag der Anmeldung: **20.09.89 Patentblatt 89/38**

(84) Benannte Vertragsstaaten: **AT BE CH DE ES FR GB GR IT LI LU NL SE**

(71) Anmelder: **LTS Lohmann Therapie-Systeme GmbH & Co. KG**
**Irlicherstrasse 55**
**D-5450 Neuwied 12(DE)**

(72) Erfinder: **Hoffmann, Hans-Rainer, Dr.**
**Burghofstrasse 123**
**D-5450 Neuwied 22(DE)**
Erfinder: **von Kleinsorgen, Reinhart, Dr. Dipl.-Chem.**
**Flurstrasse 45a**
**D-5450 Neuwied 22(DE)**

(74) Vertreter: **Neidl-Stippler, Cornelia, Dr.**
**Rauchstrasse 2**
**D-8000 München 80(DE)**

## (54) Verwendung von ketogruppenhaltigen zyklischen Verbindungen.

(57) Die Erfindung bezieht sich auf die Verwendung von ketogruppenhaltigen zyklischen Verbindungen der allgemeinen Formeln,

(I) 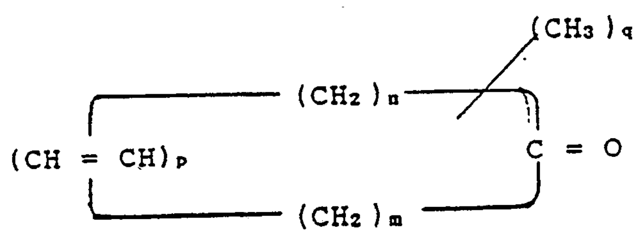

wobei m,n gleich oder ungleich und eine ganze Zahl zwischen 2 und 13 sein können, und p 0 oder 1 und q unabhängig von p 0 oder 1 ist;

(II) 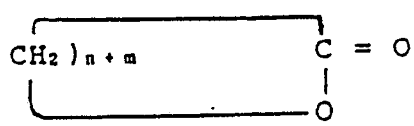

wobei m, n gleich oder ungleich und eine ganze Zahl zwischen 2 und 13 sein können;

EP 0 332 802 A1

(III) 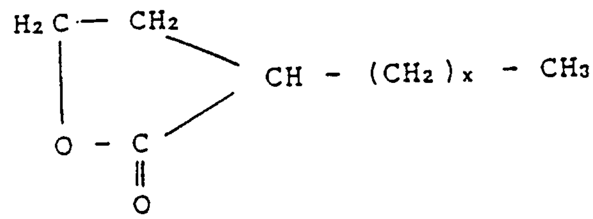

wobei x eine ganze Zahl zwischen 4 und 6 sein kann;

(IV) 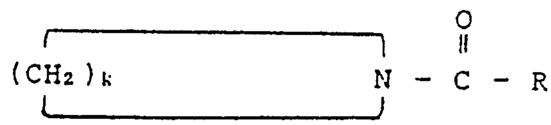

wobei k eine ganze Zahl zwischen 5 und 7 und R eine C10 bis C18-Alkylgruppe als Weichmacher für Polymere sein kann.

## Verwendung von ketogruppenhaltigen zyklischen Verbindungen

Die Erfindung betrifft die Verwendung ketogruppenhaltiger zyklischer Verbindungen der allgemeinen Formeln:

(I)

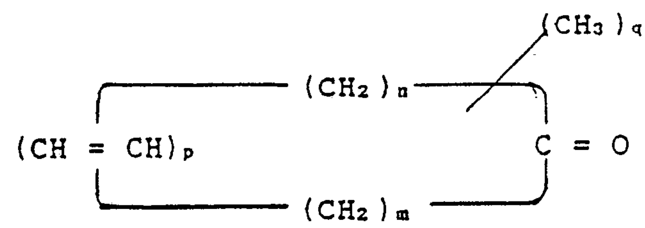

wobei m,n gleich oder ungleich und eine ganze Zahl zwischen 2 und 13 sein können, und p 0 oder 1 und q unabhängig von p 0 oder 1 ist;

(II)

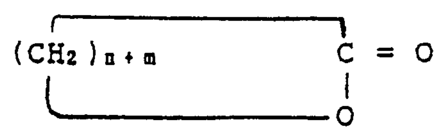

wobei m, n gleich oder ungleich und eine ganze Zahl zwischen 2 und 13 sein können;

(III)

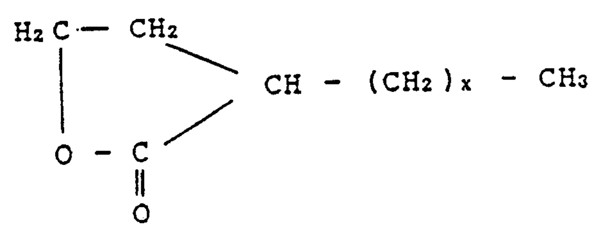

wobei x eine ganze Zahl zwischen 4 und 6 sein kann;

(IV)

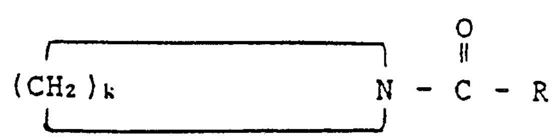

wobei k eine ganze Zahl zwischen 5 und 7 und R eine C16 bis C18-Alkylgruppe sein kann.

Die Verbindungen sind beispielsweise als Geruchsstoffe in der Duftstoffindustrie bekannt; ihre Herstellung ist u. a. in der DE-OS 21 11 753 beschrieben.

Weichmacher sind Substanzen, die einer plastischen Masse (Kunst- oder Naturstoffe) zugesetzt werden, um deren Weichheit, Biegsamkeit, Dehnbarkeit und Bearbeitbarkeit zu verbessern. Weichmacher werden vor allem in Kunststoffen, Lacken, Kautschuk, Klebstoffen und anderen Produkten verwendet. Sie sollen beispielsweise organische Filmbildnern (PVC, Harze, Kautschuk, Buna, Leinöl, Lacke, Polyvinylprodukte, Polyamiden, Co-Polyamiden, Acetylzellulosen, Nitrozellulosen und dergleichen) Haftfestigkeit, Geschmeidigkeit, Elastizität und Zähigkeit geben und bei Kunststoffen die Flexibilität verbessern. Weichmacher vereinigen sich üblicherweise mit dem Filmbildner zu physikalisch gleichmäßigen, meist flexiblen Massen. Insbesondere ist es bevorzugt, daß diese Weichmacher eine geringe Flüchtigkeit besitzen, um möglichst lange in den entsprechenden, durch sie zu verbesserten Eigenschaften gelangenden Kunststoffen zu verbleiben.

Im Prinzip beruht die weichmachende Wirkung chemischer Verbindungen darauf, daß sich diese Stoffe zwischen die Makromoleküle lagern, die Polymere quellen und beispielsweisein einen Gelzustand zu

überführen vermögen. Weichmachend wirkende chemische Verbindungen verlagern den Erweichungspunkt von Polymeren nach tieferen Temperaturen hin, wobei der elastische Zustand schon bei tieferen Temperaturen, als ohne Weichmacher, erreichbar ist.

Die Weichmachung bietet wesentliche technische und wirtschaftliche Vorteile. Bereits kleine Weichmachermengen unterstützen den Gelierprozeß, setzen die Schmelzviskosität herab, fördern den Materialdurchsatz und erleichtern die Bearbeitbarkeit der Fertigerzeugnisse. Plastische Massen nehmen mit steigendem Weichmachergehalt größere Füllstoffmengen auf, was zur Verbilligung beitragen kann. Dabei können zahlreiche Polymere, denen sonst physikalische Eigenschaften, wie Elastizität, Weichheit oder Dehnbarkeit fehlen, durch Weichmacherzusätze gezielt dahinge hend beeinflußt werden, daß sie diese Eigenschaften aufweisen. Dies beruht insbesondere auch darauf, daß durch die Weichmachermoleküle das Entstehen eines starren Kristallgerüstes der Polymeren verhindert werden kann.

Sachgemäße Auswahl, Kombination und Dosierung von Weichmachern ermöglichen es, das Erscheinungsbild der Kunststoffe so zu gestalten, daß es unter besonderer Berücksichtigung der Gebrauchstemperatur den vorgegebenen Rahmenbedingungen entspricht.

Es ist bekannt, Abietinsäureester, Adipinsäureester, Azelainsäureester, Benzoesäureester, Buttersäureester, Essigsäureester, Ester höherer Fettsäuren, epoxidierte Fettsäureester, Glykolsäureester, höhermolekulare Ester (Polymerweichmacher), Phosphorsäureester, Phtalsäureester, Propionsäureester, Sebacinsäureester, Sulfonsäureester, Thiodibuttersäureester, Trimellitinsäureester, Citronensäureester, Acetale, Ketone (Campher), Kohlenwasserstoffe, chlorierte Kohlenwasserstoffe, Polyole und Polyoläther, Polyvinyläther, Polykondensationsprodukte und Sulfonsäureamide als Weichmacher einzusetzen.

Bei vielen dieser Weichmacher ist es von Nachteil, daß sie physiologisch bedenklich sind und nicht universell in Polymeren einsetzbar sind, wie z. B. im Lebensmittelbereich, als Verpackungen oder im pharmazeutischen Bereich.

Demzufolge ist es Aufgabe der Erfindung, Weichmacher bereitzustellen, die nicht toxisch sind und mit vielen Kunststoffen kompatibel sind.

Die Aufgabe wird erfindungsgemäß durch die Verwendung von ketogruppenhaltigen zyklischen Verbindungen der allgemeinen Formeln:

(I) 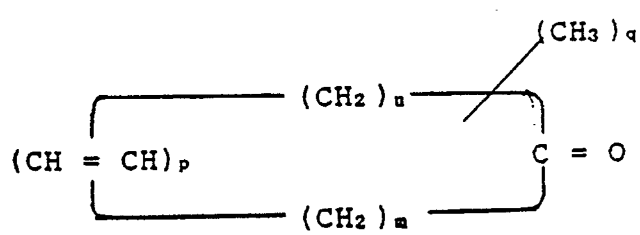

wobei m,n gleich oder ungleich und eine ganze Zahl zwischen 2 und 13 sein können und n + m = 10 - 15, und p 0 oder 1 und q unabhängig von p 0 oder 1 ist;

(II) 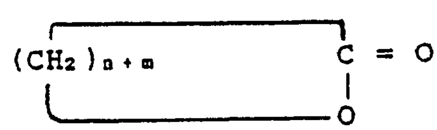

wobei m, n gleich oder ungleich und eine ganze Zahl zwischen 2 und 13 und n + m = 10 - 15 sein können;

(III) 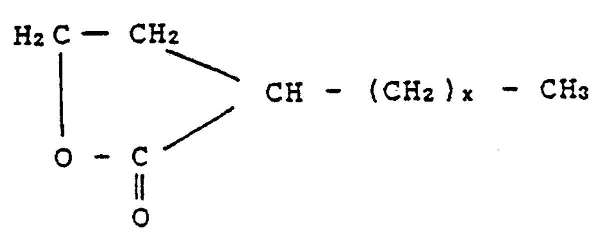

wobei x eine ganze Zahl zwischen 4 und 6 sein kann;

(IV) 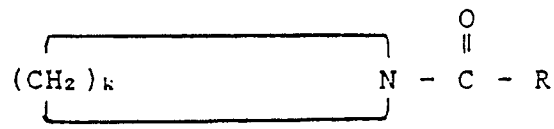

wobei k eine ganze Zahl zwischen 5 und 7 und R eine C16 bis C18-Alkylgruppe sein kann als Weichmacher für Polymere, gelöst.

Die Erfindung bezieht sich ferner auch auf eine Polymerzusammensetzung mit einem Gehalt an mindestens einem Weichmacher gemäß Anspruch 1 im Bereich zwischen 0.5 - 30 Gew.% der Polymerzusammensetzung und bevorzugt zwischen 2 - 10 Gew.%.

Vorteilhafterweise kann die Polymerzusammensetzung einen Gehalt an mindestens einem Polymer ausgewählt aus der Gruppe bestehend aus: Polyamiden, Ethylenvinylacetatcopolymeren, Polyurethane, Epoxide, Nitrocellulose, Polyvinylacetale, Polyvinylacetat, Polyethylen, Polyisobutylen, Polyester, Polyacrylate, Polymethacrylate, Polycarbonate, Silicone, Polyalkohole, Polycaprolacton, Polycaprolactam, Celluloseester, Celluloseether aufweisen.

Überraschenderweise eignen sich diese nichttoxischen Substanzen hervorragend als Weichmacher (toxikologische Daten sind für einige dieser Substanzen aufgeführt in "Food and Cosmetics Toxicology, Vol. 13), wobei die Substanzen der Formeln 1 bis 3 bisher unter anderem als Basisrohstoffe in der Riechstoffindustrie verwendet werden, beispielsweise Cycloundecanon, Cyclododecanon, Cyclotridecanon, Cyclopentadecanon, 3-Methylcyclopentadecanon, Cyclopentadecanolid, Gamma-Undecalacton, Gamma-Nonalacton, Ambrettolid (Omega-6-Hexa-decenlacton).

Substanzen der Formel IV sind erhältlich durch Acylierung der entsprechenden Imine, wie Piperidin, Hexamethylenimin mit Fettsäurechloriden, beispielsweise Laurylchlorid.

Die neuen Weichmacher sind physiologisch unbedenklich und senken in Polymeren die Glasübergangstemperatur und die Kristallinität der Polymere und vermindern so den Diffusionswiderstand eines Polymers für niedermolekulare Substanzen, wie es beispielsweise bei der schnellen oder beschleunigten Diffusion niedermolekularer Substanzen durch einen Polymerfilm in ein darauffolgendes Compartment erwünscht ist. Ein typischer Anwendungsfall ist beispielsweise die Freigabe von Arzneistoffen aus dünnen Polymerträgern zur sublingualen Applikation, die Freigabe von Arzneistoffen aus polymeren Stäbchen bei intrauterin Applikation, die Freigabe aus Implantaten und aus transdermalen Systemen.

Die erfindungsgemäßen Weichmacher eignen sich insbesonere für Klebstoffe und Polymere, die in Form dünner Filme (40 bis 500 µm) zur Anwendung kommen.

Nachfolgend wird die Erfindung anhand von Beispielen näher erläutert, die die Herstellung von Polymeren unter Verwendung der erfindungsgemäßen Weichmacher darstellen.

Beispiel 1

100 g Nitrozellulose werden in 400 ml Methylethylketon gelöst und 6 g Cycloundecanon zugesetzt. Nach Durchmischung wurde die Flüssigkeit als Schicht auf eine Glasplatte gegossen und vom Lösemittel durch Abdampfen befreit. Der derart hergestellte Nitrozellulosefilm zeigte gegenüber einem ohne Cycloundecanon-Zusatz hergestellten Film eine höhere Weichheit und Biegefähigkeit.

Beispiel 2

100 g Polyethylen werden in 400 ml Methylethylketon gelöst und 7 g Methylcyclopentadecanon zugesetzt. Nach Durchmischung wurde die Flüssigkeit ebenfalls als Schicht auf eine Glasplatte gegossen und vom Lösemittel durch Abdampfen befreit. Der derart hergestellte Nitrozellulosefilm zeigte gegenüber einem ohne Methylcyclopentadecanon-Zusatz hergestellten Film eine höhere Weichheit und Biegefähigkeit.

Beispiel 3

150 g Polyacrylatwerden in 400 ml Essigsäureethylester gelöst und 8 g Omega-6-Hexadecenlacton

zugesetzt. Nach Durchmischung wurde die Flüssigkeit ebenfalls als Schicht auf eine Glasplatte gegossen und vom Lösemittel durch Abdampfen befreit. Der derart hergestellte Nitrozellulosefilm zeigte gegenüber einem ohne Omega-6-Hexadecenlacton-Zusatz hergestellten Film eine höhere Weichheit und Biegefähigkeit.

Beispiel 4

100 g Polycarbonat werden in 200 ml Toluol gelöst und 6 g Cyclotridecanon zugesetzt. Nach Durchmischung wurde die Flüssigkeit ebenfalls als Schicht auf eine Glasplatte gegossen und vom Lösemittel durch Abdampfen befreit. Der derart hergestellte Nitrozellulosefilm zeigte gegenüber einem ohne Cyclotridecanon-Zusatz hergestellten Film eine höhere Weichheit und Biegefähigkeit.

## Ansprüche

1. Verwendung von ketogruppenhaltigen zyklischen Verbindungen der allgemeinen Formeln,

(I) 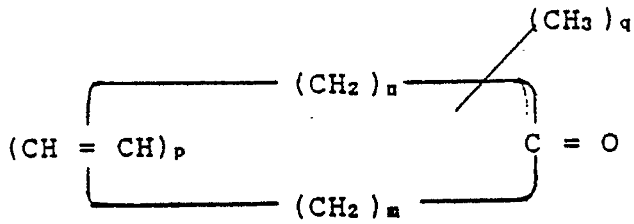

wobei m,n gleich oder ungleich und eine ganze Zahl zwischen 2 und 13 sein können und n + m = 10 - 15, und p 0 oder 1 und q unabhängig von p 0 oder 1 ist;

(II) 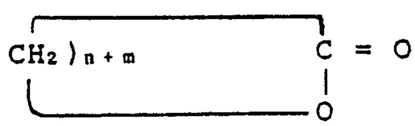

wobei m, n gleich oder ungleich und eine ganze Zahl zwischen 2 und 13 und n + m = 10 - 15 sein können;

(III) 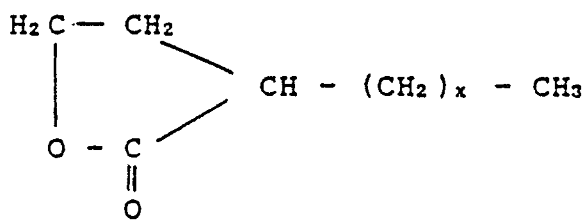

wobei x eine ganze Zahl zwischen 4 und 6 sein kann;

(IV) 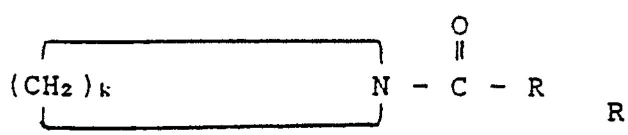

wobei k eine ganze Zahl zwischen 5 und 7 und R eine C16 bis C18-Alkylgruppe sein kann als Weichmacher für Polymere.

2. Polymerzusammensetzung, gekennzeichnet durch einen Gehalt an mindestens einem Weichmacher gemäß Anspruch 1 im Bereich zwischen 0.5 - 30 Gew.% der Polymerzusammensetzung und bevorzugt zwischen 2 - 10 Gew.%.

3. Polymerzusammensetzung gemäß Anspruch 2, gekennzeichnet durch einen Gehalt an mindestens einem Polymer ausgewählt aus der Gruppe bestehend aus: Polyamiden, Ethylenvinylacetatcopolymeren, Polyurethane, Epoxide, Nitrocellulose, Polyvinylacetale, Polyvinylacetat, Polyethylen, Polyisobutylen, Polyester, Polyacrylate, Polymethacrylate, Polycarbonate, Silicone, Polyalkohole, Polycaprolacton, Polycaprolactam, Celluloseester, Celluloseether.

Europäisches Patentamt

# EUROPÄISCHER RECHERCHENBERICHT

Nummer der Anmeldung

EP 89 10 0439

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 832 055 (GENERAL ELECTRIC)<br>* Ansprüche; Seite 12, Verbindung 3 *<br>--- | 1-3 | C 08 K 5/07<br>C 08 K 5/15<br>C 08 K 5/34 |
| X | US-A-2 214 397 (P. AUSTIN)<br>* Anspruch 1 *<br>--- | 1-3 | |
| A | US-A-3 328 329 (H. CANTOR et al.)<br>* Anspruch 1 *<br>--- | 1-3 | |
| X | US-A-3 219 612 (E. SKAU et al.)<br>* Ansprüche; Tabelle 1 *<br>----- | 1,2 | |
| | | | RECHERCHIERTE SACHGEBIETE (Int. Cl.4) |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 21-06-1989 | HOFFMANN K.W. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)